# EUROPEAN PATENT APPLICATION

(11) **EP 4 815 159 A1**
(43) Date of publication of application: **30.09.2026**
(21) Application number: 24928010.8
(22) Date of filing: 14.08.2024
(51) Int. Cl.: H01M 50/342

(54) **BATTERY PACK, BATTERY MODULE, BATTERY UNIT, AND ELECTRICAL DEVICE**

(30) Priority: 06.03.2024 CN 202410254542
(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); LONG, Chao, Ningde, Fujian 352100 (CN)
(74) Representative: Ran, Handong
(86) International application number: PCT/CN2024/112131
(87) International publication number: WO 2025/185079

(57) **Abstract**

A battery pack, a battery module, a battery unit, and an electrical device, relating to the technical field of batteries. An accommodating space (11) is formed inside a case (1) of the battery pack, and at least one battery unit is located in the accommodating space (11). Each battery unit comprises a casing (21) and at least one pouch cell (22); a cell cavity (211) is formed inside the casing (21); the at least one pouch cell (22) is provided in the cell cavity (211); at least one side of the casing (21) is provided with an electrode assembly (23) for electrically connecting to other structures; at least one side of the casing (21) is provided with a pressure relief port (212) for pressure relief; and the electrode assembly (23) and the pressure relief port (212) are located on different sides of the casing. Thermal runaway gas in the cell cavity (211) is ejected from the pressure relief port (212) under the guidance of the casing (21), so that gas emitted during thermal runaway of the battery unit is ejected in a preset direction, thereby realizing directional ejection of the thermal runaway gas of the battery unit. The electrode assembly (23) and the pressure relief port (212) are located on different sides of the casing, so that the thermal runaway gas ejected from the pressure relief port can avoid the electrode assembly (23) as much as possible.

## Description

### CROSS-REFERENCE TO RELATED APPLICATION

The present disclosure is presented based on Chinese Patent Application No. 202410254542.5, filed on March 6, 2024 and entitled "BATTERY PACK, BATTERY MODULE, BATTERY UNIT, AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a battery pack, a battery module, a battery unit, and an electric device.

### BACKGROUND

New energy batteries are increasingly widely used in life and industry. For example, new energy vehicles equipped with batteries have been widely used. In addition, batteries are also increasingly used in the field of energy storage.

In the related art, in the case of thermal runaway in the battery unit in the battery pack, the direction of the gas ejected by the battery unit in the case of thermal runaway is uncertain.

### SUMMARY

In order to solve the above technical problems, the present disclosure provides a battery pack, a battery module, a battery unit, and an electric device, such that the gas ejected by the battery unit in the case of thermal runaway is ejected in a preset direction.

The present disclosure is implemented by the following technical solutions.

A first aspect of embodiments of the present disclosure provides a battery pack. The battery pack includes:
a case, an accommodating space being formed inside; and
at least one battery unit located in the accommodating space, where each battery unit includes a housing and at least one pouch battery cell, a cell cavity is formed inside the housing, the at least one pouch battery cell is disposed in the cell cavity, at least one side of the housing is provided with an electrode assembly configured to be electrically connected to other structures, at least one side of the housing is provided with a pressure relief opening for pressure relief, and the electrode assembly and the pressure relief opening are located on different sides of the housing.

In the embodiments of the present disclosure, in the case of thermal runaway in the pouch battery cell, the thermal runaway gas in the cell cavity is ejected from the pressure relief opening under the guidance of the housing, such that the gas ejected by the battery unit in the case of thermal runaway is ejected in a preset direction, thereby enabling the directional ejection of the thermal runaway gas of the battery unit. The preset direction is the direction in which the housing faces the pressure relief opening. The electrode assembly and the pressure relief opening are located on different sides of the housing, and the thermal runaway gas ejected from the pressure relief opening can be kept away from the electrode assembly as much as possible.

In an embodiment, the electrode assembly is located on one side of the housing, and the pressure relief opening is located on the other side of the housing opposite to the electrode assembly.

In the embodiments of the present disclosure, the pressure relief opening is located on the other side of the housing opposite to the electrode assembly, the pressure relief opening can be as distal as possible to the electrode assembly, and the thermal runaway gas ejected from the pressure relief opening can be correspondingly as distal as possible to the electrode assembly.

In an embodiment, a number of pouch battery cells in each battery unit is at least two, and the electrode assembly includes a sampling electrode and at least two connecting electrodes, where one of the connecting electrodes is electrically connected to a tab of one of the pouch battery cells, the other connecting electrode is electrically connected to a tab of the other pouch battery cell, and the tabs corresponding to the two connecting electrodes have opposite polarities; the sampling electrode is electrically connected to tabs of two corresponding pouch battery cells separately, and the tabs of the two corresponding pouch battery cells electrically connected to the sampling electrode have opposite polarities.

In the embodiments of the present disclosure, the pouch battery cells of the battery unit are connected in series by means of the sampling electrode, and the pouch battery cells of the battery unit supply power to the outside or are charged by means of the connecting electrode. The sampling electrode connects the pouch battery cells of the battery unit in series, and the potential of the sampling electrode is the potential between the two series-connected pouch battery cells. By measuring and sampling the voltage between the sampling electrode and the corresponding connecting electrode, the operating state of the corresponding pouch battery cell can be determined. Since the electrode assembly and the pressure relief opening are located on different sides of the housing, the thermal runaway gas ejected from the pressure relief opening can be kept away from the connecting electrode and the sampling electrode as much as possible.

In an embodiment, at least two battery units are provided, at least one of the battery units is a first battery unit, at least one of the battery units is a second battery unit, and a side of the first battery unit provided with the electrode assembly and a side of the second battery unit provided with the electrode assembly are proximal to each other and disposed opposite to each other.

In the embodiments of the present disclosure, with the arrangement of the electrode assembly and the pressure relief opening, the thermal runaway gas ejected from the pressure relief opening can be as distal as possible to the electrode assemblies of adjacent battery units, thereby reducing the possibility of short circuit of the electrode assemblies of the adjacent battery units, and helping to inhibit thermal runaway in the battery unit in the battery pack from propagating to the adjacent battery units.

In an embodiment, the battery pack further includes an insulating layer, a space between each first battery unit and a corresponding second battery unit is filled with the insulating layer, and the insulating layer covers electrode assemblies of the first battery unit and the second battery unit separately.

In the embodiments of the present disclosure, by covering the electrode assembly with the insulating layer, insulation and isolation are realized for the electrode assemblies, and the possibility of short circuit caused by the contact between the electrode assembly and the thermal runaway gas can be reduced to some extent.

In an embodiment, the insulating layer is made of an insulating adhesive, the insulating adhesive is in a liquid state before being filled, and the liquid insulating adhesive is curable between the first battery unit and the second battery unit.

In the embodiments of the present disclosure, the insulating adhesive is in a liquid state before being filled and is cured after being filled, which is conducive to fully filling the insulating adhesive at various positions between the first battery unit and the second battery unit.

In an embodiment, at least two first battery units are provided, and a direction in which the at least two first battery units are sequentially arranged is arranged to intersect with an arrangement direction of the first battery unit and the second battery unit; at least two second battery units are provided, a direction in which the at least two second battery units are sequentially arranged is arranged to intersect with an arrangement direction of the first battery unit and the second battery unit.

In the embodiments of the present disclosure, the direction in which the at least two first battery units are sequentially arranged is arranged to intersect with the arrangement direction of the first battery unit and the second battery unit, which is conducive to inhibiting thermal runaway in the first battery unit from propagating to the adjacent first battery unit; the direction in which the at least two second battery units are sequentially arranged is arranged to intersect with the arrangement direction of the first battery unit and the second battery unit, which is conducive to inhibiting thermal runaway in the second battery unit from propagating to the adjacent second battery unit.

In an embodiment, a side wall of the accommodating space is provided with an exhaust flow channel and exhaust holes, the exhaust flow channel is in communication with the accommodating space via the exhaust holes, and the exhaust holes are formed in one side of the side wall of the accommodating space facing the accommodating space.

In the embodiments of the present disclosure, the thermal runaway gas in the accommodating space is discharged out of the case via the exhaust flow channel and the exhaust holes, thereby reducing the pressure in the case of the battery pack.

In an embodiment, an arrangement direction of the first battery unit and the second battery unit is a first direction, and the exhaust holes are formed in side walls of two opposite sides of the accommodating space in the first direction.

In the embodiments of the present disclosure, the exhaust holes are formed in the side walls of two opposite sides of the accommodating space in the first direction, and each exhaust hole is closer to the pressure relief opening corresponding to the first battery unit or the pressure relief opening corresponding to the second battery unit. The thermal runaway gas ejected from each pressure relief opening can enter the exhaust flow channel and be discharged out of the case as quickly as possible via the exhaust hole, thereby reducing the retention of the thermal runaway gas in the case. The exhaust holes are formed in the side walls of two opposite sides of the accommodating space in the first direction. Since the side walls of the two opposite sides of the accommodating space in the first direction face away from the electrode assemblies of the corresponding battery units, the thermal runaway gas in the accommodating space is discharged via the exhaust holes formed in the side walls of the two opposite sides of the accommodating space in the first direction, which helps to guide the thermal runaway gas away from the corresponding electrode assemblies, thereby inhibiting the thermal runaway propagation in the battery pack.

In an embodiment, the battery pack further includes an anti-explosion valve, the anti-explosion valve is disposed on one or both sides of the case in a second direction, the second direction is arranged to intersect with the first direction, and the exhaust flow channel is in selective communication with an outside of the case by means of the anti-explosion valve.

In the embodiments of the present disclosure, since the exhaust flow channel is in selective communication with the outside of the case by means of the anti-explosion valve, the thermal runaway gas in the accommodating space of the case is discharged to the outside of the case sequentially passing through the exhaust hole, the exhaust flow channel, and the anti-explosion valve to reduce the pressure in the accommodating space of the case. Since the exhaust holes are formed in the side walls of the two opposite sides of the accommodating space in the first direction, and the anti-explosion valve is disposed on one or both sides of the case in the second direction, the path for the thermal runaway gas to flow from the exhaust holes to the anti-explosion valve via the exhaust flow channel is long, which is conducive to cooling the thermal runaway gas. As a result, the temperature of the thermal runaway gas discharged from the anti-explosion valve is low.

In an embodiment, a length direction of the accommodating space is arranged in the second direction.

In the embodiments of the present disclosure, in the embodiments of the present disclosure, the exhaust holes are formed in the side walls of the two opposite sides of the accommodating space in the first direction, the anti-explosion valve is disposed on one or both sides of the case in the second direction, and the length direction of the accommodating space is arranged in the second direction, such that the side wall of the accommodating space in the first direction is long, which is conducive to increasing the length of the exhaust flow channel in the corresponding side wall, thereby prolonging the exhaust path for the thermal runaway gas and reducing the exhaust temperature of the thermal runaway gas. As a result, the temperature of the thermal runaway gas discharged from the anti-explosion valve is low.

In an embodiment, the side wall of the accommodating space includes:
a wall body, the exhaust holes being formed in the wall body; and
a reinforcing rib connected in the wall body, where the reinforcing rib and the wall body define, in an enclosing manner, the exhaust flow channel and a weight reducing cavity isolated from each other, and the weight reducing cavity is located on one side of the exhaust flow channel facing away from the accommodating space.

In the embodiments of the present disclosure, the overall strength of the side wall is increased by means of the reinforcing rib, and the weight of the side wall is reduced by means of the weight reducing cavity, thereby increasing the energy density.

In an embodiment, the case includes:
a main case, where the accommodating space is formed in the main case, a first protruding part and a second protruding part are formed in an upper part of the main case, and the second protruding part is located on one side of the first protruding part facing away from the accommodating space; and
a case cover covering the accommodating space of the main case, where the case cover is provided with a sealing part, the sealing part is disposed between the first protruding part and the second protruding part and on one side of the second protruding part facing away from the first protruding part, and the sealing part is in contact with and sealed with the main case in an arrangement direction of the main case and the case cover.

In the embodiments of the present disclosure, the first protruding part, the second protruding part, and the corresponding sealing part cooperate to improve the sealing performance between the main case and the case cover.

In an embodiment, the battery unit further includes a flame-retardant cover covering the pressure relief opening, and a pressure-bearing capacity of the housing is greater than a pressure-bearing capacity of the flame-retardant cover.

In the embodiments of the present disclosure, the flame-retardant cover covers the pressure relief opening, and the flame-retardant cover has some flame-retardant capability, which can reduce, to some extent, the possibility of ignition of the flame-retardant cover in the case of thermal runaway in the battery unit. The flame-retardant cover covers the pressure relief opening, such that in the case of thermal runaway in adjacent battery units, the entry of the thermal runaway gas generated by adjacent battery units into the cell cavity via the pressure relief opening can be reduced, which is conducive to inhibiting the thermal runaway propagation to some extent. In the case of thermal runaway in the pouch battery cell in the cell cavity, since the pressure-bearing capacity of the housing is greater than the pressure-bearing capacity of the flame-retardant cover, the thermal runaway gas in the cell cavity first breaks through the flame-retardant cover, such that the thermal runaway gas in the cell cavity is ejected in a directed manner from the pressure relief opening.

In an embodiment, the flame-retardant cover is made of mica.

In the embodiments of the present disclosure, the flame-retardant cover is made of mica. The mica has some flame-retardant capability and is essentially unlikely to be ignited in the case of thermal runaway in the battery unit. The thin flame-retardant cover made of mica may have a low pressure-bearing capacity.

In an embodiment, the housing includes:
a main housing, where the pressure relief opening is formed in the main housing, and the main housing is made of metal or plastic; and
a top cover, defining the cell cavity in an enclosing manner with the main housing, where the electrode assembly is disposed on the top cover, and the top cover is made of plastic.

In the embodiments of the present disclosure, the main housing made of metal or plastic material can better protect the pouch battery cell in the cell cavity, and the top cover made of plastic material has good insulating properties, thereby facilitating the mounting of the electrode assembly. The flame-retardant cover made of mica is convenient to be manufactured into a structure with a low pressure-bearing capacity on the basis of preventing the flame-retardant cover from being ignited in the case of thermal runaway.

In an embodiment, the flame-retardant cover is provided with through holes in communication with the cell cavity, the battery unit further includes a temperature regulation container partially located in the cell cavity, the pouch battery cell is disposed on one side or two opposite sides of the temperature regulation container, the temperature regulation container is provided with a temperature regulation cavity and an inlet and an outlet that are separately in communication with the temperature regulation cavity, and the temperature regulation container is disposed in the through hole in a penetrating manner, such that the inlet and the outlet are both exposed outside the cell along one side of the housing facing the flame-retardant cover.

In the embodiments of the present disclosure, the inlet and the outlet of the temperature regulation container extend beyond the cell cavity via the through holes of the flame-retardant cover, such that the temperature regulation container can be connected to an external fluid source via the inlet and the outlet, and the external fluid can enter the temperature regulation container via the inlet and flow out via the outlet, thereby regulating the temperature of the pouch battery cell. The inlet and the outlet of the temperature regulation container extend beyond the cell cavity via the through holes of the flame-retardant cover, and the through holes do not need to be sealed, which is conducive to simplifying the structure of the battery unit.

In an embodiment, the housing includes:
a main housing, the pressure relief opening being formed in the main housing; and
a top cover, defining the cell cavity in an enclosing manner with the main housing, where the electrode assembly is disposed on the top cover, the top cover is provided with a flange covering a side wall of the main housing, and a gap between the flange and the side wall of the main housing is less than or equal to 0.5 mm.

In the embodiments of the present disclosure, the flange and the side wall of the main housing are not fully sealed, and the gap between the flange and the side wall of the main housing is appropriately configured, such that the resistance to the thermal runaway gas escaping from the gap between the flange and the side wall of the main housing is high, which can better inhibit the thermal runaway gas from being ejected toward the top cover, thereby better guiding the thermal runaway gas in the accommodating space to be ejected in a directed manner from the pressure relief opening.

A second aspect of the embodiments of the present disclosure provides a battery module. The battery module includes at least two sequentially arranged battery units, where each battery unit includes a housing and at least one pouch battery cell; a cell cavity is formed inside the housing; the at least one pouch battery cell is disposed in the cell cavity; at least one side of the housing is provided with an electrode assembly configured to be electrically connected to other structures, and at least one side of the housing is provided with a pressure relief opening for pressure relief; the electrode assembly and the pressure relief opening are located on different sides of the housing; electrode assemblies of the at least two sequentially arranged battery units have the same orientation.

A third aspect of the embodiments of the present disclosure provides a battery unit. The battery unit includes a housing and at least one pouch battery cell, where a cell cavity is formed inside the housing, the at least one pouch battery cell is disposed in the cell cavity, at least one side of the housing is provided with an electrode assembly configured to be electrically connected to other structures, at least one side of the housing is provided with a pressure relief opening for pressure relief, and the electrode assembly and the pressure relief opening are located on different sides of the housing.

A fourth aspect of the embodiments of the present disclosure provides an electric device. The electric device includes:
a device body; and
the battery pack according to any one of the above embodiments, mounted to the device body to supply power to the device body.

### Advantageous Effects of Invention:

In the embodiments of the present disclosure, in the case of thermal runaway in the pouch battery cell, the thermal runaway gas in the cell cavity is ejected from the pressure relief opening under the guidance of the housing, such that the gas ejected by the battery unit in the case of thermal runaway is ejected in a preset direction, thereby enabling the directional ejection of the thermal runaway gas of the battery unit. The preset direction is the direction in which the housing faces the pressure relief opening. The electrode assembly and the pressure relief opening are located on different sides of the housing, and the thermal runaway gas ejected from the pressure relief opening can be kept away from the electrode assembly as much as possible.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a schematic structural diagram of a battery pack according to an embodiment of the present disclosure, where an insulating layer is shown and a case cover is not shown;
FIG. 2 is a schematic exploded view of a battery pack according to an embodiment of the present disclosure, where a case cover is not shown;
FIG. 3 is a schematic structural diagram of a main case according to an embodiment of the present disclosure;
FIG. 4 is a schematic structural diagram of a battery pack according to an embodiment of the present disclosure, where a case cover is shown;
FIG. 5 is a schematic structural diagram of a battery pack according to an embodiment of the present disclosure, where a cutting position of the battery pack is shown;
FIG. 6 is a cross-sectional view of position A-A in FIG. 5;
FIG. 7 is an enlarged view of portion B in FIG. 6;
FIG. 8 is a schematic structural diagram of a battery unit according to an embodiment of the present disclosure, where an electrode assembly is not shown;
FIG. 9 is a schematic structural diagram of a battery unit according to an embodiment of the present disclosure, where an electrode assembly is shown;
FIG. 10 is a schematic exploded view of a battery unit according to an embodiment of the present disclosure;
FIG. 11 is an arrangement diagram of a temperature regulation container and a pouch battery cell in a battery unit according to an embodiment of the present disclosure; and
FIG. 12 is an assembly diagram of a top cover and a main housing according to an embodiment of the present disclosure, where a gap between a flange of the top cover and a side wall of the main housing is shown.

### Description of the reference numerals:

1: case; 11: accommodating space; 12: target side wall; 121: exhaust flow channel; 122: exhaust hole; 123: wall body; 124: reinforcing rib; 125: weight reducing cavity; 13: main case; 131: first protruding part; 132: second protruding part; 14: case cover; 141: sealing part; 21: housing; 211: cell cavity; 212: pressure relief opening; 213: main housing; 214: top cover; 2141: flange; 22: pouch battery cell; 221: tab; 23: electrode assembly; 231: sampling electrode; 232: connecting electrode; 24: flame-retardant cover; 241: through hole; 25: temperature regulation container; 251: inlet; 252: outlet; 201: first battery unit; 202: second battery unit; 3: insulating layer; 4: battery module; 5: anti-explosion valve.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure belongs. The terms used herein are intended to merely describe the specific embodiments, rather than to limit the present disclosure. The terms "include", "comprise", "have", and "provided with", and any other variations thereof in the embodiments of the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

In the related art, the battery unit is not provided with a structure for guiding the directional ejection of the thermal runaway gas. In the case of thermal runaway in the battery cells in the battery unit of the battery pack, the ejection direction of the thermal runaway gas ejected by the battery unit is uncertain, making it difficult to guide the thermal runaway gas to be discharged in the corresponding required preset direction for pressure relief.

According to the embodiments of the present disclosure, the pouch battery cell is disposed in the cell cavity of the housing. In the case of thermal runaway in the battery unit, the thermal runaway gas ejected in all directions as a result of thermal runaway in the pouch battery cell in the housing is constrained by the housing, and the thermal runaway gas in the cell cavity is guided by the housing to be ejected toward the pressure relief opening for pressure relief, such that the gas ejected by the battery unit in the case of thermal runaway is ejected in the preset direction, thereby enabling the directional ejection of the thermal runaway gas of the battery unit. The preset direction is the direction in which the housing faces the pressure relief opening. The electrode assembly and the pressure relief opening are located on different sides of the housing, and the thermal runaway gas ejected from the pressure relief opening can be kept away from the electrode assembly as much as possible.

The battery unit according to the embodiments of the present disclosure may be used in, but is not limited to, electric devices such as energy storage power systems, vehicles, ships, or aircraft.

The battery unit according to the embodiments of the present disclosure may also be assembled into groups to serve as a battery pack. The battery pack may also be used in, but is not limited to, electric devices such as energy storage power systems, vehicles, ships, or aircraft. Using the battery pack can provide higher total energy. Moreover, the battery pack is formed by disposing a plurality of grouped batteries in a sealed case, thereby providing more reliable dustproof and waterproof performance. Therefore, the battery pack can be applied in harsher and more humid environments, and even in submerged usage scenarios.

If a plurality of battery cells are provided, the plurality of battery cells may be connected in series, in parallel, or in series-parallel. The series-parallel connection means that both series connection and parallel connection are present in the connection of the plurality of battery cells. The plurality of battery cells may be directly connected in series, in parallel, or in series-parallel to form a battery pack. Certainly, the plurality of battery cells may be first connected in series, in parallel, or in series-parallel to form a battery module, and then a plurality of battery modules are connected in series, in parallel, or in series-parallel to form a battery pack. The battery pack may further include other structures. For example, the battery pack may further include a busbar component for achieving electrical connection among the plurality of battery cells.

The battery cell refers to a unit that enables the mutual conversion between chemical energy and electric energy.

In the embodiments of the present disclosure, the battery cell may be a secondary battery. The secondary battery refers to a battery cell that can continue to be used by activating an active material through charging after the battery cell is discharged.

In the embodiments of the present disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present disclosure.

The embodiments of the present disclosure provide an electric device including the above battery unit or battery pack configured to provide electric energy. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

The electric device according to the embodiments of the present disclosure includes a device body and a battery pack, and the battery pack is mounted to the device body to supply power to the device body.

In the embodiments of the present disclosure, the battery pack supplies power to the device body, such that the device body receives the electric energy required to maintain normal operation.

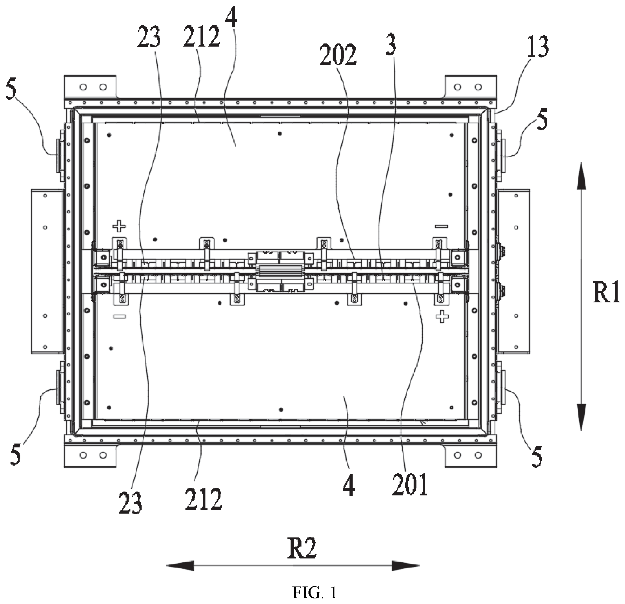

Referring to FIGs. 1 to 7, the battery pack according to the embodiments of the present disclosure includes a case 1 and a battery unit. An accommodating space 11 is formed inside the case 1. A battery unit is located in the accommodating space 11. At least one battery unit is provided, and each battery unit includes a housing 21 and at least one pouch battery cell 22. A cell cavity 211 is formed inside the housing 21, and the at least one pouch battery cell 22 is disposed in the cell cavity 211. At least one side of the housing 21 is provided with an electrode assembly 23 configured to be electrically connected to other structures, and at least one side of the housing 21 is provided with a pressure relief opening 212 for pressure relief. The electrode assembly 23 and the pressure relief opening 212 are located on different sides of the housing 21.

The accommodating space 11 of the case 1 is configured to accommodate the battery unit.

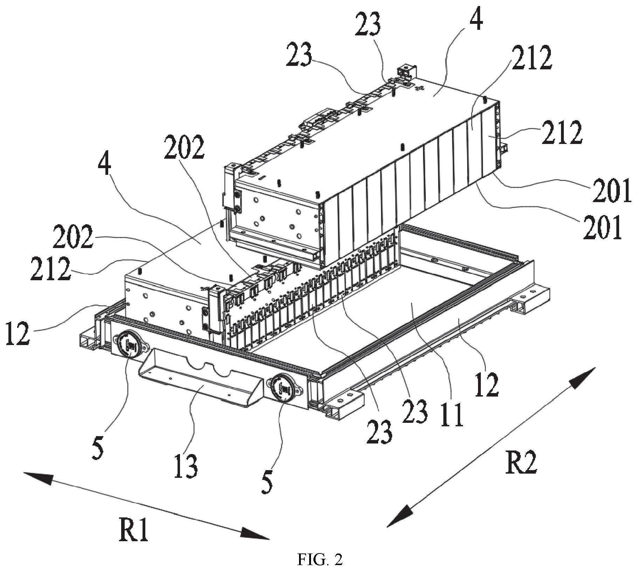

Illustratively, referring to FIGs. 2, 3, and 6, one accommodating space 11 may be provided.

Illustratively, at least two accommodating spaces 11 may be provided.

The pouch battery cell 22 is one of the battery cells.

The pouch battery cell 22 includes a bare cell and a plastic film wrapping the bare cell to protect the bare cell.

Illustratively, the plastic film is an aluminum-plastic film.

The bare cell includes a positive electrode plate, a negative electrode plate, and a separator located between the positive electrode plate and the negative electrode plate.

The bare cell may be a wound bare cell or a stacked bare cell.

The cell cavity 211 is a cavity that accommodates the pouch battery cell 22.

It should be explained that the electrode assembly 23 is configured for the external electrical connection of the battery unit, and the pouch battery cell 22 in the battery unit can supply power to the outside by means of the electrode assembly 23, and can also charge the pouch battery cell 22 of the corresponding battery unit by means of the electrode assembly 23. Therefore, the electrode assembly 23 is electrically connected to a tab 221 of the pouch battery cell 22 in the housing 21.

It should be explained that at least one side of the housing 21 is provided with an electrode assembly 23 configured to be electrically connected to other structures, and the other structures herein refer to structures outside the corresponding battery unit that are electrically connected to the corresponding battery unit. For example, the battery units are connected in series or in parallel by means of the electrode assembly 23, and in two battery units electrically connected by means of the corresponding electrode assembly 23, the electrode assembly 23 of one battery unit is another structure electrically connected to the electrode assembly 23 of the other battery unit.

At least one side of the housing 21 is provided with a pressure relief opening 212 for pressure relief. The housing 21 mainly relieves pressure via the pressure relief opening 212, and the housing 21 guides the gas in the cell cavity 211 to be discharged from the pressure relief opening 212.

It should be noted that the electrode assembly 23 is a part of the battery unit, and each battery unit is provided with a corresponding electrode assembly 23.

In the embodiments of the present disclosure, in the case of thermal runaway in the pouch battery cell 22, the thermal runaway gas in the cell cavity 211 is ejected from the pressure relief opening 212 under the guidance of the housing 21, such that the gas ejected by the battery unit in the case of thermal runaway is ejected in a preset direction, thereby enabling the directional ejection of the thermal runaway gas of the battery unit. The preset direction is the direction in which the housing 21 faces the pressure relief opening 212. The electrode assembly 23 and the pressure relief opening 212 are located on different sides of the housing 21, and the thermal runaway gas ejected from the pressure relief opening 212 can be kept away from the electrode assembly 23 as much as possible.

In an embodiment, referring to FIGs. 1 to 3 and 8 to 10, the electrode assembly 23 is located on one side of the housing 21, and the pressure relief opening 212 is located on the other side of the housing 21 opposite to the electrode assembly 23.

In the embodiments of the present disclosure, the pressure relief opening 212 is located on the other side of the housing 21 opposite to the electrode assembly 23, the pressure relief opening 212 can be as distal as possible to the electrode assembly 23, and the thermal runaway gas ejected from the pressure relief opening 212 can be correspondingly as distal as possible to the electrode assembly 23.

It can be understood that the positional arrangement of the pressure relief opening 212 is not limited. Illustratively, the direction of the housing 21 facing the pressure relief opening 212 is arranged to intersect with the direction of the housing 21 facing the electrode assembly 23.

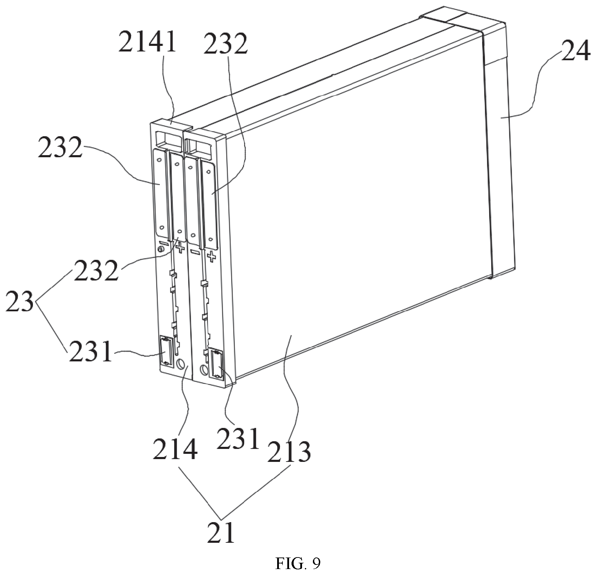

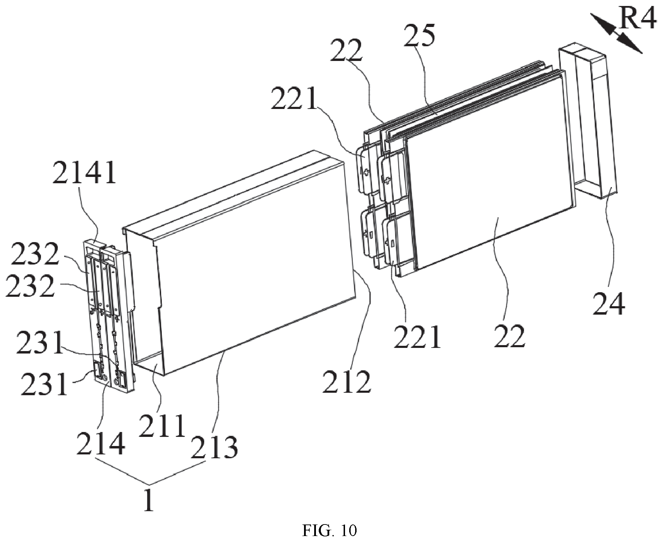

In an embodiment, referring to FIGs. 9 and 10, the number of pouch battery cells 22 in each battery unit is at least two, and the electrode assembly 23 includes a sampling electrode 231 and at least two connecting electrodes 232. One of the connecting electrodes 232 is electrically connected to a tab 221 of one of the pouch battery cells 22, and the other connecting electrode 232 is electrically connected to a tab 221 of the other pouch battery cell 22. The tabs 221 corresponding to the two connecting electrodes 232 have opposite polarities. The sampling electrode 231 is electrically connected to tabs 221 of two corresponding pouch battery cells 22 separately, and the tabs 221 of the two corresponding pouch battery cells 22 electrically connected to the sampling electrode 231 have opposite polarities.

The tabs 221 corresponding to the at least two connecting electrodes 232 have opposite polarities, with the polarity of one connecting electrode 232 being positive and the polarity of one connecting electrode 232 being negative. The pouch battery cells 22 of the battery unit can supply power to the outside by means of the connecting electrode 232, and the pouch battery cells 22 of the corresponding battery unit can be charged by means of the connecting electrode 232.

The sampling electrode 231 is electrically connected to tabs 221 of the two corresponding pouch battery cells 22 separately, and the tabs 221 of the two corresponding pouch battery cells 22 electrically connected to the sampling electrode 231 have opposite polarities. Each sampling electrode 231 is electrically connected to the tab 221 of the positive electrode of one of the pouch battery cells 22 and the tab 221 of the negative electrode of the other pouch battery cell 22 separately, and the pouch battery cells 22 of the battery unit are connected in series by means of the sampling electrode 231.

Illustratively, referring to FIGs. 9 and 10, the connecting electrode 232 and the sampling electrode 231 are both busbars.

In the embodiments of the present disclosure, the pouch battery cells 22 of the battery unit are connected in series by means of the sampling electrode 231, and the pouch battery cells 22 of the battery unit supply power to the outside or are charged by means of the connecting electrode 232. The sampling electrode 231 connects the pouch battery cells 22 of the battery unit in series, and the potential of the sampling electrode 231 is the potential between the two series-connected pouch battery cells 22. By measuring and sampling the voltage between the sampling electrode 231 and the corresponding connecting electrode 232, the operating state of the corresponding pouch battery cell 22 can be determined. Since the electrode assembly 23 and the pressure relief opening 212 are located on different sides of the housing 21, the thermal runaway gas ejected from the pressure relief opening 212 can avoid the connecting electrode 232 and the sampling electrode 231 as much as possible.

In an embodiment, referring to FIGs. 1 to 3, at least two battery units are provided, where at least one of the battery units is a first battery unit 201, and at least one of the battery units is a second battery unit 202. The side of the first battery unit 201 provided with the electrode assembly 23 and the side of the second battery unit 202 provided with the electrode assembly 23 are proximal to each other and disposed opposite to each other.

Illustratively, referring to FIGs. 1 to 3, the pressure relief opening 212 is formed in the other side of the housing 21 opposite to the electrode assembly 23, the pressure relief opening 212 of the first battery unit 201 is formed in one side of the housing 21 of the first battery unit 201 facing away from the second battery unit 202, and the pressure relief opening 212 of the second battery unit 202 is formed in one side of the housing 21 of the second battery unit 202 facing away from the first battery unit 201.

It should be noted that the side of the first battery unit 201 provided with the electrode assembly 23 and the side of the second battery unit 202 provided with the electrode assembly 23 are proximal to each other and disposed opposite to each other. In the arrangement direction of the first battery unit 201 and the second battery unit 202, the first battery unit 201 and the second battery unit 202 are spaced apart by a certain distance, which reduces the possibility of short circuit between the electrode assembly 23 of the first battery unit 201 and the electrode assembly 23 of the second battery unit 202 that are proximal to each other.

In the embodiments of the present disclosure, the side of the first battery unit 201 provided with the electrode assembly 23 and the side of the second battery unit 202 provided with the electrode assembly 23 are proximal to each other and disposed opposite to each other. Since each electrode assembly 23 and the corresponding pressure relief opening 212 are on different sides of the corresponding housing 21, the pressure relief opening 212 of the first battery unit 201 and the pressure relief opening 212 of the second battery unit 202 can avoid the region between the first battery unit 201 and the second battery unit 202 as much as possible, and the pressure relief opening 212 of the first battery unit 201 and the pressure relief opening 212 of the second battery unit 202 both avoid the electrode assemblies 23. As a result, the thermal runaway gas ejected from the pressure relief opening 212 of the first battery unit 201 can avoid the electrode assembly 23 of the second battery unit 202 as much as possible, and the thermal runaway gas ejected from the pressure relief opening 212 of the second battery unit 202 can avoid the electrode assembly 23 of the first battery unit 201 as much as possible, thereby helping to inhibit thermal runaway in the battery units in the battery pack from propagating to adjacent battery units.

In an embodiment, referring to FIG. 1, the battery pack further includes an insulating layer 3. The space between each first battery unit 201 and the corresponding second battery unit 202 is filled with the insulating layer 3, and the insulating layer 3 covers the electrode assemblies 23 of the first battery unit 201 and the second battery unit 202 separately.

The material of the insulating layer 3 is substantially non-conductive.

In the embodiments of the present disclosure, the electrode assemblies 23 of the first battery unit 201 and the second battery unit 202 are both covered by the insulating layer 3 in the space between the first battery unit 201 and the second battery unit 202. In one aspect, the electrode assemblies 23 of the first battery unit 201 and the second battery unit 202 can be better insulated and isolated by the insulating layer 3. In another aspect, the thermal runaway gas generated by the battery unit experiencing thermal runaway is blocked by the insulating layer 3, and the electrode assembly and the thermal runaway gas can be better isolated by the insulating layer 3, which is conducive to inhibiting the thermal runaway propagation in the battery pack. Furthermore, the electrode assemblies 23 of the first battery unit 201 and the second battery unit 202 are both covered by the insulating layer 3 in the space between the first battery unit 201 and the second battery unit 202. The insulating layer 3 covering the electrode assembly 23 of the first battery unit 201 and the insulating layer 3 covering the electrode assembly 23 of the second battery unit 202 share the space between the first battery unit 201 and the second battery unit 202, which can reduce the space occupied by the insulating layer 3 and is conducive to improving the energy density.

In an embodiment, referring to FIG. 1, the insulating layer 3 is made of an insulating adhesive, the insulating adhesive is in a liquid state before being filled, and the liquid insulating adhesive is curable between the first battery unit 201 and the second battery unit 202.

The liquid insulating adhesive can be cured between the first battery unit 201 and the second battery unit 202, which means that the liquid insulating adhesive between the first battery unit 201 and the second battery unit 202 can be converted into a solid state and remain in the solid state at normal temperature and pressure.

Illustratively, the insulating adhesive may be an insulating resin.

In the embodiments of the present disclosure, the insulating adhesive is in a liquid state before being filled, and the liquid insulating adhesive can be filled into the space between the first battery unit 201 and the second battery unit 202. The liquid insulating adhesive can flow well in the space between the first battery unit 201 and the second battery unit 202, and the flowing liquid insulating adhesive can fill each position of the space between the first battery unit 201 and the second battery unit 202 as much as possible and cure, which is conducive to better insulation between the electrode assemblies 23 and better separation of the thermal runaway gas from the electrode assemblies 23.

It can be understood that the material of the insulating layer 3 is not limited. Illustratively, the material of the insulating layer 3 may always remain in a solid state.

In an embodiment, referring to FIGs. 1 and 2, at least two first battery units 201 are provided, and the direction in which the at least two first battery units 201 are sequentially arranged is arranged to intersect with the arrangement direction of the first battery unit 201 and the second battery unit 202; at least two second battery units 202 are provided, and the direction in which the at least two second battery units 202 are sequentially arranged is arranged to intersect with the arrangement direction of the first battery unit 201 and the second battery unit 202.

Illustratively, referring to FIGs. 1 and 2, the arrangement direction of the first battery unit 201 and the second battery unit 202 is a first direction.

Illustratively, referring to FIGs. 1 to 3, 5, and 6, the first direction is the direction indicated by the arrow R1 in the figures.

Illustratively, referring to FIGs. 1 and 2, the direction in which the at least two first battery units 201 are sequentially arranged is perpendicular to the first direction.

Illustratively, referring to FIGs. 1 and 2, the direction in which the at least two second battery units 202 are sequentially arranged is perpendicular to the first direction.

Illustratively, referring to FIGs. 1 and 2, at least two first battery units 201 form a corresponding battery module 4, and the at least two first battery units 201 in the same corresponding battery module 4 are sequentially arranged.

Illustratively, referring to FIGs. 1 and 2, at least two second battery units 202 form a corresponding battery module 4, and the at least two second battery units 202 in the same corresponding battery module 4 are sequentially arranged.

Illustratively, referring to FIGs. 1 and 2, two battery modules 4 are shown in the figures. One of the battery modules 4 is primarily formed by twelve sequentially arranged first battery units 201, and the other battery module 4 is primarily formed by twelve sequentially arranged second battery units 202. The direction in which the twelve first battery units 201 are sequentially arranged is substantially parallel to the direction in which the twelfth second battery units 202 are sequentially arranged. The arrangement direction of the first battery unit 201 and the second battery unit 202 is substantially perpendicular to the direction in which the twelve first battery units 201 are sequentially arranged. The arrangement direction of the first battery unit 201 and the second battery unit 202 is substantially perpendicular to the direction in which the twelve second battery units 202 are sequentially arranged. The electrode assemblies 23 of the twelve first battery units 201 are all located on one side of the housing 21 of the corresponding first battery unit 201 facing the corresponding second battery unit 202, and the electrode assemblies 23 of the twelve second battery units 202 are all located on one side of the housing 21 of the corresponding second battery unit 202 facing the corresponding first battery unit 201; the pressure relief openings 212 of the twelve first battery units 201 are all formed in one side of the housing 21 of the corresponding first battery unit 201 facing away from the corresponding second battery unit 202, and the pressure relief openings 212 of the twelve second battery units 202 are all formed in one side of the housing 21 of the corresponding second battery unit 202 facing away from the corresponding first battery unit 201.

In the embodiments of the present disclosure, at least two first battery units 201 are sequentially arranged, and at least two second battery units 202 are sequentially arranged. Since the side of the first battery unit 201 provided with the electrode assembly 23 and the side of the second battery unit 202 provided with the electrode assembly 23 are proximal to each other and disposed opposite to each other, the thermal runaway gas ejected from the pressure relief openings 212 of the sequentially arranged first battery units 201 can avoid the electrode assemblies 23 of the sequentially arranged second battery units 202 as much as possible, and can also avoid the electrode assembly 23 of the adjacent first battery unit 201 among the at least two sequentially arranged first battery units 201 as much as possible, which is conducive to inhibiting thermal runaway in the first battery unit 201 from propagating to the adjacent first battery unit 201. The thermal runaway gas ejected from the pressure relief openings 212 of the sequentially arranged second battery units 202 can avoid the electrode assemblies 23 of the sequentially arranged first battery units 201 as much as possible, and can also avoid the electrode assembly 23 of the adjacent second battery unit 202 among the at least two sequentially arranged second battery units 202 as much as possible, which is conducive to inhibiting thermal runaway in the second battery unit 202 from propagating to the adjacent second battery unit 202.

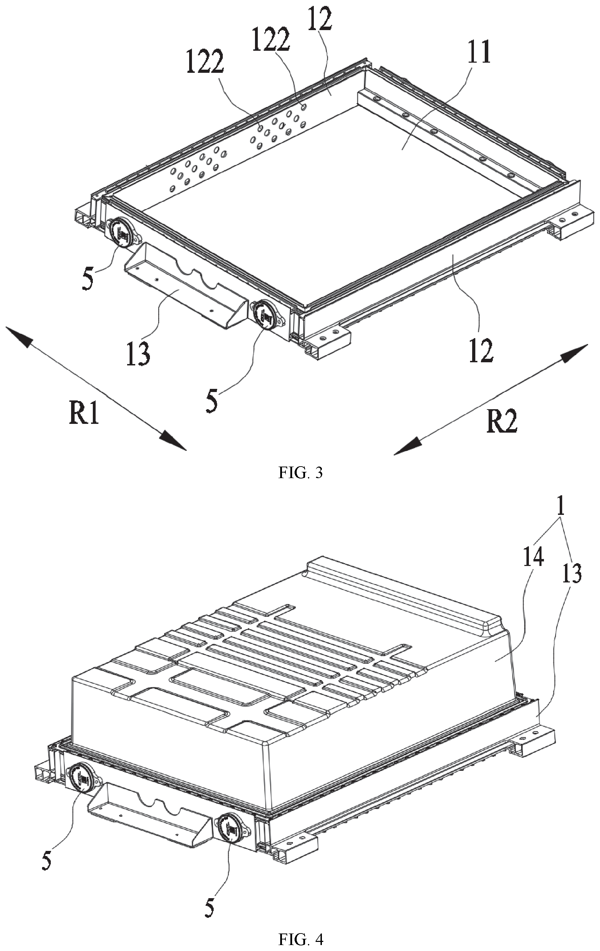

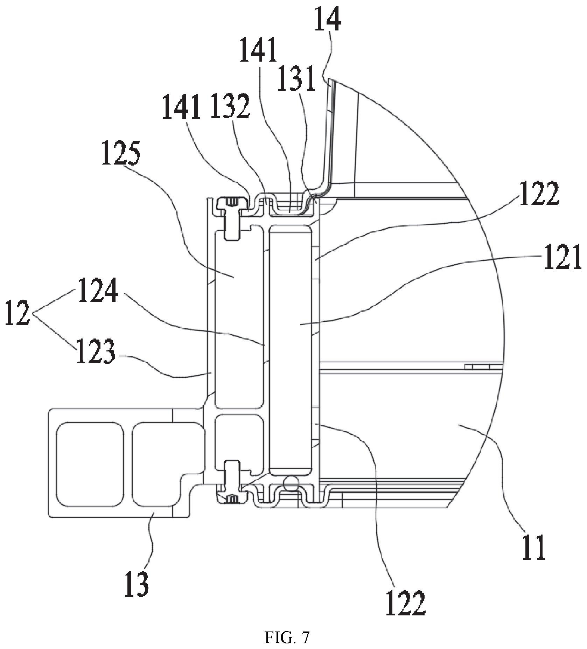

In an embodiment, referring to FIGs. 3 and 7, the side wall of the accommodating space 11 is provided with an exhaust flow channel 121 and exhaust holes 122. The exhaust flow channel 121 is in communication with the accommodating space 11 via the exhaust holes 122, and the exhaust holes 122 are formed in one side of the side wall of the accommodating space 11 facing the accommodating space 11.

The exhaust flow channel 121 and the exhaust hole 122 are configured to discharge the thermal runaway gas in the accommodating space 11 out of the case 1.

Illustratively, referring to FIGs. 2, 3, and 6, the side wall of the accommodating space 11 is a target side wall 12.

In the embodiments of the present disclosure, the exhaust hole 122 formed in one side of the side wall of the accommodating space 11 facing the accommodating space 11 communicates the accommodating space 11 in the case 1 with the exhaust flow channel 121. In the case of thermal runaway in the battery unit in the accommodating space 11, the thermal runaway gas generated by the battery unit is discharged into the accommodating space 11 via the pressure relief opening 212, and the thermal runaway gas discharged into the accommodating space 11 via the pressure relief opening 212 is then discharged to the outside of the case 1 via the exhaust hole 122 and the corresponding exhaust flow channel 121, thereby reducing the pressure in the case 1 of the battery pack.

In an embodiment, referring to FIGs. 3 and 7, the arrangement direction of the first battery unit 201 and the second battery unit 202 is a first direction, and the exhaust holes 122 are formed in the side walls of two opposite sides of the accommodating space 11 in the first direction.

Illustratively, referring to FIGs. 1 to 3 and 5 to 7, the first direction is the direction indicated by the arrow R1 in the figures.

In the embodiments of the present disclosure, the exhaust holes 122 are formed in the side walls of two opposite sides of the accommodating space 11 in the first direction, and each exhaust hole 122 is closer to the pressure relief opening 212 corresponding to the first battery unit 201 or the pressure relief opening 212 corresponding to the second battery unit 202. The thermal runaway gas ejected from each pressure relief opening 212 can enter the exhaust flow channel 121 and be discharged out of the case 1 as quickly as possible via the exhaust hole 122, thereby reducing the retention of the thermal runaway gas in the case 1. The exhaust holes 122 are formed in the side walls of two opposite sides of the accommodating space 11 in the first direction. Since the side walls of the two opposite sides of the accommodating space 11 in the first direction face away from the electrode assemblies 23 of the corresponding battery units, the thermal runaway gas in the accommodating space 11 is discharged via the exhaust holes 122 formed in the side walls of the two opposite sides of the accommodating space 11 in the first direction, which helps to guide the thermal runaway gas away from the corresponding electrode assemblies 23, thereby inhibiting the thermal runaway propagation in the battery pack.

It can be understood that the positional arrangement of the exhaust hole 122 is not limited. The exhaust holes 122 may be disposed on two opposite sides of the accommodating space 11 in the direction along with the first direction.

In an embodiment, referring to FIGs. 1 to 5, the battery pack further includes an anti-explosion valve 5. The anti-explosion valve 5 is disposed on one or both sides of the case 1 in a second direction, the second direction is arranged to intersect with the first direction, and the exhaust flow channel 121 is in selective communication with the outside of the case 1 by means of the anti-explosion valve 5.

Illustratively, referring to FIGs. 1 to 3 and 5, the second direction is the direction indicated by the arrow R2 in the figures.

The exhaust flow channel 121 is in selective communication with the outside of the case 1 by means of the anti-explosion valve 5. In the case that the pressure in the exhaust flow channel 121 is less than the valve-opening pressure of the anti-explosion valve 5, the anti-explosion valve 5 cuts off the exhaust flow channel 121 from the outside of the case 1. In the case that the pressure in the exhaust flow channel 121 is greater than or equal to the valve-opening pressure of the anti-explosion valve 5, the anti-explosion valve 5 communicates the exhaust flow channel 121 with the outside of the case 1.

In the embodiments of the present disclosure, since the exhaust flow channel 121 is in selective communication with the outside of the case 1 by means of the anti-explosion valve 5, the thermal runaway gas in the accommodating space 11 of the case 1 is discharged to the outside of the case 1 sequentially passing through the exhaust hole 122, the exhaust flow channel 121, and the anti-explosion valve 5 to reduce the pressure in the accommodating space 11 of the case 1. Since the exhaust holes 122 are formed in the side walls of the two opposite sides of the accommodating space 11 in the first direction, and the anti-explosion valve 5 is disposed on one or both sides of the case 1 in the second direction, the path for the thermal runaway gas to flow from the exhaust holes 122 to the anti-explosion valve 5 via the exhaust flow channel 121 is long, which is conducive to cooling the thermal runaway gas. As a result, the temperature of the thermal runaway gas discharged from the anti-explosion valve 5 is low.

It can be understood that the position of the anti-explosion valve 5 is not limited. Illustratively, the anti-explosion valve 5 may be disposed on one or both sides of the case 1 in the first direction as appropriate.

In an embodiment, referring to FIGs. 1 to 3 and 5 to 7, the length direction of the accommodating space 11 is arranged in the second direction.

In the embodiments of the present disclosure, the exhaust holes 122 are formed in the side walls of the two opposite sides of the accommodating space 11 in the first direction, the anti-explosion valve 5 is disposed on one or both sides of the case 1 in the second direction, and the length direction of the accommodating space 11 is arranged in the second direction, such that the side wall of the accommodating space 11 in the first direction is long, which is conducive to increasing the length of the exhaust flow channel 121 in the corresponding side wall, thereby prolonging the exhaust path for the thermal runaway gas and reducing the exhaust temperature of the thermal runaway gas. As a result, the temperature of the thermal runaway gas discharged from the anti-explosion valve 5 is low.

It can be understood that the length direction of the accommodating space 11 may be arranged in the first direction.

In an embodiment, referring to FIGs. 3 and 5 to 7, the side wall of the accommodating space 11 includes a wall body 123 and a reinforcing rib 124. The exhaust holes 122 are formed in the wall body 123. The reinforcing rib 124 is connected in the wall body 123, the reinforcing rib 124 and the wall body 123 define, in an enclosing manner, the exhaust flow channel 121 and a weight reducing cavity 125 isolated from each other, and the weight reducing cavity 125 is located on one side of the exhaust flow channel 121 facing away from the accommodating space 11.

The wall body 123 is the main support structure for the side wall of the accommodating space 11.

Illustratively, referring to FIGs. 2, 3, and 7, the side wall of the accommodating space 11 is the target side wall 12.

Illustratively, referring to FIG. 7, the reinforcing rib 124 is plate-shaped.

In the embodiments of the present disclosure, the exhaust hole 122 is formed in the wall body 123, and the thermal runaway gas in the accommodating space 11 enters the wall body 123 via the exhaust hole 122. The reinforcing rib 124 in the wall body 123 and the wall body 123 define, in an enclosing manner, the exhaust flow channel 121 and the weight reducing cavity 125, and the weight reducing cavity 125 is located on one side of the exhaust flow channel 121 facing away from the accommodating space 11. The overall strength of the accommodating space 11 is improved by the reinforcing rib 124, and the weight of the side wall of the accommodating space 11 is reduced by using the weight reducing cavity 125. In the case that the strength of the side wall of the accommodating space 11 is sufficient, it is conducive to improving the energy density of the battery pack. The weight reducing cavity 125 is located on one side of the exhaust flow channel 121 facing away from the accommodating space 11, the weight reducing cavity 125 is farther away from the accommodating space 11, and the exhaust flow channel 121 is closer to the accommodating space 11, such that the exhaust flow channel 121 is in communication with the exhaust hole 122 proximal to the accommodating space 11 to receive the thermal runaway gas in the accommodating space 11.

It can be understood that the specific structure of the side wall of the accommodating space 11 is not limited. Illustratively, the side wall of the accommodating space 11 may include the wall body 123 but does not include the reinforcing rib 124.

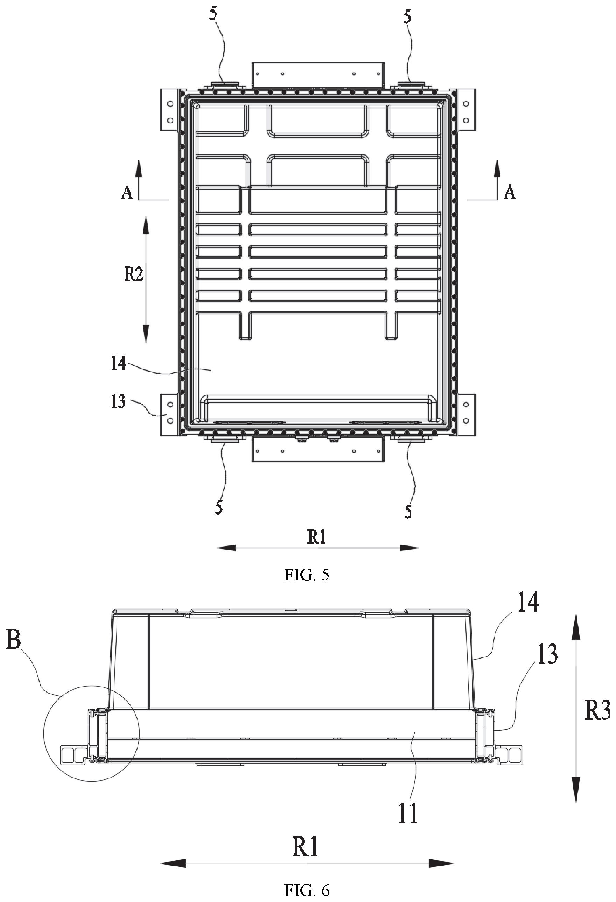

In an embodiment, referring to FIGs. 5 to 7, the case 1 includes a main case 13 and a case cover 14. The accommodating space 11 is formed in the main case 13, a first protruding part 131 and a second protruding part 132 are formed in the upper part of the main case 13, and the second protruding part 132 is located on one side of the first protruding part 131 facing away from the accommodating space 11. The case cover 14 covers the accommodating space 11 of the main case 13. The case cover 14 is provided with a sealing part 141. The sealing part 141 is disposed between the first protruding part 131 and the second protruding part 132 and on one side of the second protruding part 132 facing away from the first protruding part 131. The sealing part 141 is in contact with and sealed with the main case 13 in the arrangement direction of the main case 13 and the case cover 14.

The accommodating space 11 is formed in the main case 13, and the side wall of the accommodating space 11 is formed on the main case 13.

Illustratively, referring to FIGs. 3 and 5 to 7, the exhaust hole 122 and the exhaust flow channel 121 are formed in the main case 13.

Illustratively, referring to FIGs. 1 to 5, the anti-explosion valve 5 is mounted on the main case 13.

Illustratively, referring to FIG. 6, the arrangement direction of the main case 13 and the case cover 14 is the direction indicated by the arrow R3 in the figure.

Illustratively, the first protruding part 131 and the second protruding part 132 are arranged in an extending manner in the circumferential direction of the accommodating space 11.

In the embodiments of the present disclosure, the case cover 14 covers the accommodating space 11 of the main case 13, such that the battery unit in the accommodating space 11 is enclosed in the case 1. The case cover 14 defines, in the vicinity of the sealing part 141, a structure with a plurality of bent flow channels with the first protruding part 131 and the second protrusion of the main case 13. The resistance to the flow of the fluid in the structure with the plurality of bent flow channels is large, which helps to inhibit the thermal runaway gas in the accommodating space 11 of the main case 13 from escaping from a gap between the main case 13 and the case cover 14, thereby achieving a good sealing effect between the main case 13 and the case cover 14.

It can be understood that the specific structure of the case 1 is not limited. Illustratively, the first protruding part 131 and the second protruding part 132 may not be provided in the upper part of the main case 13, and the upper part of the main case 13 may be a plane.

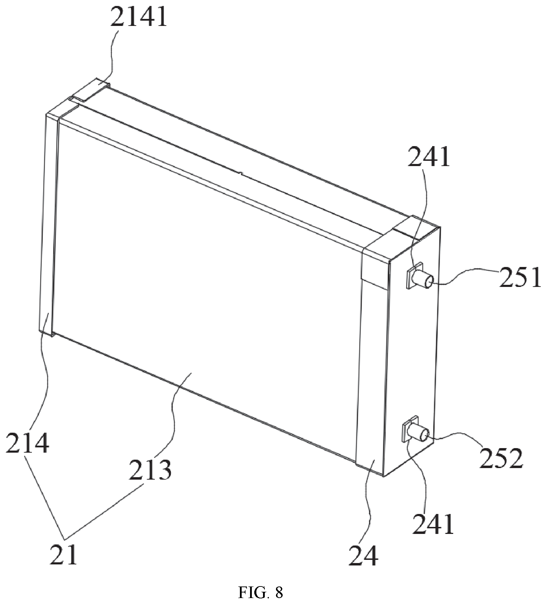

In an embodiment, referring to FIGs. 8 to 10, the battery unit further includes a flame-retardant cover 24 covering the pressure relief opening 212, and the pressure-bearing capacity of the housing 21 is greater than the pressure-bearing capacity of the flame-retardant cover 24.

The pressure-bearing capacity refers to the ability to withstand fluid pressure.

The relative magnitude of the pressure-bearing capacity can be measured by introducing gas into the housing 21. Specifically, since the flame-retardant cover 24 covers the pressure relief opening 212, the cell cavity 211 is substantially closed by the housing 21 and the flame-retardant cover 24. In the case that gas is introduced into the cell cavity 211, the gas pressure in the cell cavity 211 continuously increases, and the gas pressure borne by the housing 21 and the flame-retardant cover 24 continuously increases. During the process of continuously introducing gas into the cell cavity 211, the flame-retardant cover 24 is damaged earlier than the housing 21; that is, the pressure-bearing capacity of the flame-retardant cover 24 is less than the pressure-bearing capacity of the housing 21, and the pressure-bearing capacity of the housing 21 is greater than the pressure-bearing capacity of the flame-retardant cover 24.

The flame-retardant cover 24 has some flame-retardant capability. In the case of thermal runaway in the battery unit, the flame-retardant cover 24 may deform due to a high temperature, but is essentially unlikely to be ignited.

In the embodiments of the present disclosure, the flame-retardant cover 24 covers the pressure relief opening 212, and the flame-retardant cover 24 has some flame-retardant capability, which can reduce, to some extent, the possibility of ignition of the flame-retardant cover 24 in the case of thermal runaway in the battery unit. The flame-retardant cover 24 covers the pressure relief opening 212, such that in the case of thermal runaway in adjacent battery units, the entry of the thermal runaway gas generated by adjacent battery units into the cell cavity 211 via the pressure relief opening 212 can be reduced, which is conducive to inhibiting the thermal runaway propagation to some extent. In the case of thermal runaway in the pouch battery cell 22 in the cell cavity 211, since the pressure-bearing capacity of the housing 21 is greater than the pressure-bearing capacity of the flame-retardant cover 24, the thermal runaway gas in the cell cavity 211 first breaks through the flame-retardant cover 24, such that the thermal runaway gas in the cell cavity 211 is ejected in a directed manner from the pressure relief opening 212.

In an embodiment, referring to FIGs. 8 to 10, the flame-retardant cover 24 is made of mica.

Illustratively, the flame-retardant cover 24 may be made of mica paper.

Illustratively, the flame-retardant cover 24 is made of mica paper.

Illustratively, the mica paper is bonded to the housing 21.

In the embodiments of the present disclosure, the flame-retardant cover 24 is made of mica. The mica has some flame-retardant capability and is essentially unlikely to be ignited in the case of thermal runaway in the battery unit. The thin flame-retardant cover 24 made of mica may have a low pressure-bearing capacity.

In an embodiment, referring to FIGs. 8 to 10, the housing 21 includes a main housing 213 and a top cover 214. The pressure relief opening 212 is formed in the main housing 213. The top cover 214 and the main housing 213 define, in an enclosing manner, the cell cavity 211, and the electrode assembly 23 is disposed on the top cover 214.

In the embodiments of the present disclosure, before the top cover 214 is mounted to the main housing 213, the electrode assembly 23 on the top cover 214 may be electrically connected to the tab 221 of the pouch battery cell 22, and then the connected top cover 214, electrode assembly 23, and pouch battery cell 22 are mounted to the main housing 213, thereby facilitating the connection between the electrode assembly 23 and the pouch battery cell 22 before the electrode assembly and the pouch battery cell are placed into the housing.

In an embodiment, referring to FIGs. 8 to 10, the main housing 213 is made of metal or plastic, and the top cover 214 is made of plastic.

Illustratively, the main housing 213 is made of metal, and the thickness of the main housing 213 is 0.1 mm to 1 mm.

Illustratively, the thickness of the main housing 213 may be 0.1 mm, 0.2 mm, 0.3 mm, 0.4 mm, 0.5 mm, 0.8 mm, or 1 mm.

Illustratively, the main housing 213 is made of plastic, the main housing 213 is of an integrally formed structure, and the thickness of the main housing 213 is 1 mm to 3 mm.

Illustratively, the thickness of the main housing 213 may be 1 mm, 1.2 mm, 1.5 mm, 1.8 mm, 2 mm, 2.3 mm, 2.6 mm, 2.9 mm, or 3 mm.

In the embodiments of the present disclosure, the main housing 213 made of metal or plastic material can better protect the pouch battery cell 22 in the cell cavity 211, and the top cover 214 made of plastic material has good insulating properties, thereby facilitating the mounting of the electrode assembly 23. The flame-retardant cover 24 made of mica is convenient to be manufactured into a structure with a low pressure-bearing capacity on the basis of preventing the flame-retardant cover 24 from being ignited in the case of thermal runaway.

It can be understood that the materials of the housing 21 and the flame-retardant cover 24 may be set based on an actual requirement.

In an embodiment, the ignition point of the flame-retardant cover 24 and the ignition point of the housing 21 are both greater than or equal to 800 °C.

Illustratively, the ignition point of the flame-retardant cover 24 may be 800 °C, 810 °C, 860 °C, 900 °C, or the like.

Illustratively, the ignition point of the flame-retardant cover 24 can be measured by heating the flame-retardant cover 24 to incipient combustion.

Illustratively, the ignition point of the housing 21 can be measured by heating the housing 21 to incipient combustion.

In the embodiments of the present disclosure, the ignition point of the flame-retardant cover 24 and the ignition point of the housing 21 are high, and the flame-retardant cover 24 and the housing 21 are essentially unlikely to be ignited even under the influence of a high-temperature thermal runaway gas.

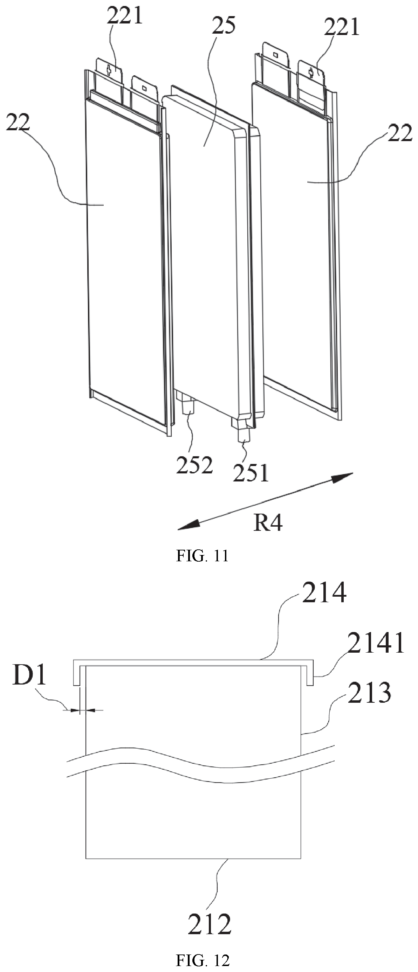

In an embodiment, referring to FIG. 12, the top cover 214 is provided with a flange 2141 covering the side wall of the main housing 213, and a gap between the flange 2141 and the side wall of the main housing 213 is less than or equal to 0.5 mm.

Illustratively, the gap between the flange 2141 and the side wall of the main housing 213 may be 0.5 mm, 0.4 mm, 0.3 mm, 0.2 mm, or 0.1 mm.

Illustratively, before the top cover 214 is mounted into the main housing 213, but the top cover 214 is not connected to the main housing 213, the dimension between the flange 2141 and the side wall of the main housing 213 may be measured using a plug gauge, a vernier caliper, or a micrometer caliper.

Illustratively, the dimension of the span of the flange 2141 of the top cover 214 and the dimension of the corresponding span of the main housing 213 may also be separately measured using a vernier caliper, a micrometer caliper, or the like, and half of the difference between the two is the gap between the top cover 214 and the main housing 213.

Illustratively, referring to FIG. 12, the gap between the flange 2141 and the side wall of the main housing 213 is D1, and D1 ≤ 0.5 mm.

In the embodiments of the present disclosure, the flange 2141 and the side wall of the main housing 213 are not fully sealed, and the gap between the flange 2141 and the side wall of the main housing 213 is appropriately configured, such that the resistance to the thermal runaway gas escaping from the gap between the flange 2141 and the side wall of the main housing 213 is high, which can better inhibit the thermal runaway gas from being ejected toward the top cover 214, thereby better guiding the thermal runaway gas in the accommodating space 11 to be ejected in a directed manner from the pressure relief opening 212.

It can be understood that no gap may be left between the main housing 213 and the top cover 214, and the main housing 213 and the top cover 214 may be fully sealed.

In an embodiment, referring to FIG. 8, the flame-retardant cover 24 is provided with through holes 241 in communication with the cell cavity 211. The battery unit further includes a temperature regulation container 25 partially located in the cell cavity 211. The pouch battery cell 22 is disposed on one side or two opposite sides of the temperature regulation container 25. The temperature regulation container 25 is provided with a temperature regulation cavity and an inlet 251 and an outlet 252 that are separately in communication with the temperature regulation cavity. The temperature regulation container 25 is disposed in the through hole 241 in a penetrating manner, such that the inlet 251 and the outlet 252 are both exposed outside the cell along one side of the housing 21 facing the flame-retardant cover 24.

Illustratively, referring to FIG. 10, pouch battery cells 22 are disposed on two opposite sides of the temperature regulation container 25, and two pouch battery cells 22 are provided on each side.

Illustratively, referring to FIG. 10, two pouch battery cells 22 on each side are connected in series by means of corresponding sampling electrodes 231, and the two pouch battery cells 22 on each side supply power or are charged by means of two corresponding connecting electrodes 232.

Illustratively, referring to FIG. 11, one pouch battery cell 22 may be provided on each side.

Illustratively, one pouch battery cell 22 may be provided on each side, and the pouch battery cells 22 on both sides may be connected in series by means of the corresponding sampling electrode 231.

Illustratively, referring to FIG. 11, the temperature regulation container 25 and the pouch battery cell 22 on the corresponding side are arranged in a preset direction, and the preset direction is perpendicular to the surface of the pouch battery cell 22 with the largest area.

Illustratively, referring to FIG. 11, the preset direction is the direction indicated by the arrow R4 in the figure.

In the embodiments of the present disclosure, the inlet 251 and the outlet 252 of the temperature regulation container 25 extend beyond the cell cavity 211 via the through holes 241 of the flame-retardant cover 24, such that the temperature regulation container 25 can be connected to an external fluid source via the inlet 251 and the outlet 252, and the external fluid can enter the temperature regulation container 25 via the inlet 251 and flow out via the outlet 252, thereby regulating the temperature of the pouch battery cell 22. The inlet 251 and the outlet 252 of the temperature regulation container 25 extend beyond the cell cavity 211 via the through holes 241 of the flame-retardant cover 24, and the through holes 241 do not need to be sealed, which is conducive to simplifying the structure of the battery unit.

The embodiments of the present disclosure further provide a battery module 4. Referring to FIGs. 1 and 2, the battery module 4 includes at least two sequentially arranged battery units. Each battery unit includes a housing 21 and at least one pouch battery cell 22. A cell cavity 211 is formed inside the housing 21, and the at least one pouch battery cell 22 is disposed in the cell cavity 211. At least one side of the housing 21 is provided with an electrode assembly 23 configured to be electrically connected to other structures, and at least one side of the housing 21 is provided with a pressure relief opening 212 for pressure relief. The electrode assembly 23 and the pressure relief opening 212 are located on different sides of the housing 21. The electrode assemblies 23 of the at least two sequentially arranged battery units have the same orientation, and in the at least two sequentially arranged battery units, the orientation of the electrode assembly 23 is arranged to intersect with the direction in which the at least two battery units are sequentially arranged.

Illustratively, referring to FIGs. 1 and 2, in the at least two sequentially arranged battery units, the orientation of the electrode assembly 23 is perpendicular to the direction in which the at least two battery units are sequentially arranged.

Illustratively, referring to FIGs. 1 and 2, the electrode assemblies 23 of the first battery units 201 in the same battery module 4 all face the corresponding second battery units 202.

Illustratively, referring to FIGs. 1 and 2, the electrode assemblies 23 of the second battery units 202 in the same battery module 4 all face the corresponding first battery units 201.

Illustratively, referring to FIGs. 1 and 2, two battery modules 4 are shown in the figures.

In the embodiments of the present disclosure, the number of battery units in the battery module 4 is at least two. The electrode assembly 23 and the pressure relief opening 212 are located on different sides of the housing 21, the electrode assemblies 23 of the at least two sequentially arranged battery units have the same orientation, and in the at least two sequentially arranged battery units, the orientation of the electrode assembly 23 is arranged to intersect with the direction in which the at least two battery units are sequentially arranged, such that the pressure relief opening 212 of each battery unit in the battery module 4 can avoid the electrode assembly 23 of each battery unit, thereby reducing the possibility that the electrode assemblies 23 of adjacent battery units are short-circuited by the thermal runaway gas ejected from the pressure relief opening 212 of any battery unit, which is conducive to inhibiting thermal runaway in the battery unit from propagating to adjacent battery units.

The embodiments of the present disclosure further provide a battery unit. Referring to FIGs. 8 to 10, the battery unit includes a housing 21 and at least one pouch battery cell 22. A cell cavity 211 is formed inside the housing 21, and the at least one pouch battery cell 22 is disposed in the cell cavity 211. At least one side of the housing 21 is provided with an electrode assembly 23 configured to be electrically connected to other structures, and at least one side of the housing 21 is provided with a pressure relief opening 212 for pressure relief. The electrode assembly 23 and the pressure relief opening 212 are located on different sides of the housing 21.

In the embodiments of the present disclosure, the electrode assembly 23 and the pressure relief opening 212 are located on different sides of the housing 21, such that the pressure relief opening 212 of the battery unit can be distal to the electrode assembly 23. In the case that at least two battery units are sequentially arranged and the electrode assemblies 23 of the at least two sequentially arranged battery units have the same orientation, the pressure relief openings 212 of the at least two sequentially arranged battery units can avoid the electrode assembly 23 of each battery unit, and the thermal runaway gas ejected from the pressure relief opening 212 can be as distal as possible to the electrode assemblies 23 of adjacent battery units, thereby reducing the possibility of short circuit of the electrode assemblies 23 of the adjacent battery units, and inhibiting the possibility of thermal runaway in the battery unit propagating to the adjacent battery units.

In an embodiment, referring to FIGs. 1 to 12, the top cover 214, the main housing 213, and the mica paper serving as the flame-retardant cover 24 of the battery unit do not need to be fully sealed, as long as the thermal runaway gas in the cell cavity 211 can be guided to be ejected from the pressure relief opening 212. The pouch battery cell 22 is disposed in a space enclosed by the main housing 213, the top cover 214, and the flame-retardant cover 24. At least two battery units are provided, where at least one of the battery units is a first battery unit 201, and at least one of the battery units is a second battery unit 202. The side of the first battery unit 201 provided with the electrode assembly 23 and the side of the second battery unit 202 provided with the electrode assembly 23 are proximal to each other and disposed opposite to each other. The space between each first battery unit 201 and the corresponding second battery unit 202 is filled with an insulating layer 3, and the insulating layer 3 covers the electrode assemblies 23 of the first battery unit 201 and the second battery unit 202 separately. The insulating layer 3 is made of an insulating adhesive, the insulating adhesive is in a liquid state before being filled, and the liquid insulating adhesive is curable between the first battery unit 201 and the second battery unit 202. The electrode assembly 23 is located on one side of the housing 21, and the pressure relief opening 212 is located on the other side of the housing 21 opposite to the electrode assembly 23. At least two first battery units 201 are provided, the at least two first battery units 201 form the corresponding battery module 4, and the at least two first battery units 201 in the same corresponding battery module 4 are sequentially arranged. At least two second battery units 202 are provided, the at least two second battery units 202 form the corresponding battery module 4, and the at least two second battery units 202 in the same corresponding battery module 4 are sequentially arranged. The case 1 includes a main case 13 and a case cover 14. The accommodating space 11 is formed in the main case 13, a first protruding part 131 and a second protruding part 132 are formed in the upper part of the main case 13, and the second protruding part 132 is located on one side of the first protruding part 131 facing away from the accommodating space 11. The case cover 14 covers the accommodating space 11 of the main case 13. The case cover 14 is provided with a sealing part 141. The sealing part 141 is disposed between the first protruding part 131 and the second protruding part 132 and on one side of the second protruding part 132 facing away from the first protruding part 131. The sealing part 141 is in contact with and sealed with the case 1 in the arrangement direction of the main case 13 and the case cover 14. A sealant may be filled between the sealing part 141 and the main case 13 to improve the sealing performance between the main case 13 and the case cover 14. The side wall of the accommodating space 11 includes a wall body 123 and a reinforcing rib 124. The exhaust holes 122 are formed in the wall body 123. The reinforcing rib 124 is connected in the wall body 123, the reinforcing rib 124 and the wall body 123 define, in an enclosing manner, the exhaust flow channel 121 and a weight reducing cavity 125 isolated from each other, and the weight reducing cavity 125 is located on one side of the exhaust flow channel 121 facing away from the accommodating space 11. The case cover 14 and the main case 13 are connected by screws, and the screws are located on one side of the reinforcing rib 124 facing away from the exhaust flow channel 121. The weight reducing cavity 125 may be in communication with the outside of the case 1. The electrode assembly 23 mounted on the top cover 214 is a busbar. The arrangement direction of the first battery unit 201 and the second battery unit 202 is a first direction, and the exhaust holes 122 are formed in the side walls of two opposite sides of the accommodating space 11 in the first direction. An anti-explosion valve 5 is disposed on one or both sides of the case 1 in a second direction, the second direction is arranged to intersect with the first direction, and the exhaust flow channel 121 is in selective communication with the outside of the case 1 by means of the anti-explosion valve 5. The side wall of the accommodating space 11 of the case 1 may be made of an extruded aluminum profile or an extruded magnesium profile. The case cover 14 and the bottom plate of the main case 13 may both be made of sheet metal, composite materials, carbon fibers, or the like.

The foregoing embodiments are merely used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the present disclosure. In particular, the technical features mentioned in the embodiments can be combined in any manner, provided that there is no structural conflict.

## Claims

1. A battery pack, comprising:
a case, an accommodating space being formed inside; and
at least one battery unit located in the accommodating space, wherein each battery unit comprises a housing and at least one pouch battery cell, wherein:
a cell cavity is formed inside the housing, and the at least one pouch battery cell is disposed in the cell cavity; and
at least one side of the housing is provided with an electrode assembly configured to be electrically connected to other structures, and at least one side of the housing is provided with a pressure relief opening for pressure relief, wherein the electrode assembly and the pressure relief opening are located on different sides of the housing.

2. The battery pack according to claim 1, wherein the electrode assembly is located on one side of the housing, and the pressure relief opening is located on the other side of the housing opposite to the electrode assembly.

3. The battery pack according to claim 1 or 2, wherein at least two pouch battery cells are provided in each battery unit, and the electrode assembly comprises a sampling electrode and at least two connecting electrodes, wherein:
one of the connecting electrodes is electrically connected to a tab of one of the pouch battery cells, the other connecting electrode is electrically connected to a tab of the other pouch battery cell, and the tabs corresponding to the two connecting electrodes have opposite polarities; and
the sampling electrode is electrically connected to tabs of two corresponding pouch battery cells separately, and the tabs of the two corresponding pouch battery cells electrically connected to the sampling electrode have opposite polarities.

4. The battery pack according to any one of claims 1 to 3, wherein at least two battery units are provided, at least one of the battery units is a first battery unit, at least one of the battery units is a second battery unit, and a side of the first battery unit provided with the electrode assembly and a side of the second battery unit provided with the electrode assembly are proximal to each other and disposed opposite to each other.

5. The battery pack according to claim 4, wherein the battery pack further comprises an insulating layer, a space between each first battery unit and a corresponding second battery unit is filled with the insulating layer, and the insulating layer covers electrode assemblies of the first battery unit and the second battery unit separately.

6. The battery pack according to claim 5, wherein the insulating layer is made of an insulating adhesive, the insulating adhesive is in a liquid state before being filled, and the liquid insulating adhesive is curable between the first battery unit and the second battery unit.

7. The battery pack according to any one of claims 4 to 6, wherein:
at least two first battery units are provided, and a direction in which the at least two first battery units are sequentially arranged is arranged to intersect with an arrangement direction of the first battery unit and the second battery unit; and
at least two second battery units are provided, a direction in which the at least two second battery units are sequentially arranged is arranged to intersect with an arrangement direction of the first battery unit and the second battery unit.

8. The battery pack according to any one of claims 4 to 7, wherein a side wall of the accommodating space is provided with an exhaust flow channel and exhaust holes, the exhaust flow channel is in communication with the accommodating space via the exhaust holes, and the exhaust holes are formed in one side of the side wall of the accommodating space facing the accommodating space.

9. The battery pack according to claim 8, wherein an arrangement direction of the first battery unit and the second battery unit is a first direction, and the exhaust holes are formed in side walls of two opposite sides of the accommodating space in the first direction.

10. The battery pack according to claim 9, wherein the battery pack further comprises an anti-explosion valve, the anti-explosion valve is disposed on one or both sides of the case in a second direction, the second direction is arranged to intersect with the first direction, and the exhaust flow channel is in selective communication with an outside of the case by means of the anti-explosion valve.

11. The battery pack according to claim 10, wherein a length direction of the accommodating space is arranged in the second direction.

12. The battery pack according to any one of claims 8 to 11, wherein the side wall of the accommodating space comprises:
a wall body, the exhaust holes being formed in the wall body; and
a reinforcing rib connected in the wall body, wherein the reinforcing rib and the wall body define, in an enclosing manner, the exhaust flow channel and a weight reducing cavity isolated from each other, and the weight reducing cavity is located on one side of the exhaust flow channel facing away from the accommodating space.

13. The battery pack according to any one of claims 1 to 12, wherein the case comprises:
a main case, wherein the accommodating space is formed in the main case, a first protruding part and a second protruding part are formed in an upper part of the main case, and the second protruding part is located on one side of the first protruding part facing away from the accommodating space; and
a case cover covering the accommodating space of the main case, wherein the case cover is provided with a sealing part, the sealing part is disposed between the first protruding part and the second protruding part and on one side of the second protruding part facing away from the first protruding part, and the sealing part is in contact with and sealed with the main case in an arrangement direction of the main case and the case cover.

14. The battery pack according to any one of claims 1 to 13, wherein the battery unit further comprises a flame-retardant cover covering the pressure relief opening, and a pressure-bearing capacity of the housing is greater than a pressure-bearing capacity of the flame-retardant cover.

15. The battery pack according to claim 14, wherein the flame-retardant cover is made of mica.

16. The battery pack according to claim 15, wherein the housing comprises:
a main housing, wherein the pressure relief opening is formed in the main housing, and the main housing is made of metal or plastic; and
a top cover, defining the cell cavity in an enclosing manner with the main housing, wherein the electrode assembly is disposed on the top cover, and the top cover is made of plastic.

17. The battery pack according to any one of claims 14 to 16, wherein the flame-retardant cover is provided with through holes in communication with the cell cavity, and the battery unit further comprises a temperature regulation container partially located in the cell cavity, wherein the pouch battery cell is disposed on one side or two opposite sides of the temperature regulation container, the temperature regulation container is provided with a temperature regulation cavity and an inlet and an outlet that are separately in communication with the temperature regulation cavity, and the temperature regulation container is disposed in the through hole in a penetrating manner, such that the inlet and the outlet are both exposed outside the cell along one side of the housing facing the flame-retardant cover.

18. The battery pack according to any one of claims 1 to 17, wherein the housing comprises:
a main housing, the pressure relief opening being formed in the main housing; and
a top cover, defining the cell cavity in an enclosing manner with the main housing, wherein the electrode assembly is disposed on the top cover, the top cover is provided with a flange covering a side wall of the main housing, and a gap between the flange and the side wall of the main housing is less than or equal to 0.5 mm.

19. A battery module, comprising at least two sequentially arranged battery units, wherein each battery unit comprises a housing and at least one pouch battery cell, wherein:
a cell cavity is formed inside the housing;
the at least one pouch battery cell is disposed in the cell cavity; and
at least one side of the housing is provided with an electrode assembly configured to be electrically connected to other structures, and at least one side of the housing is provided with a pressure relief opening for pressure relief, wherein:
the electrode assembly and the pressure relief opening are located on different sides of the housing; and
electrode assemblies of the at least two sequentially arranged battery units have the same orientation, and in the at least two sequentially arranged battery units, the orientation of the electrode assembly is arranged to intersect with a direction in which the at least two battery units are sequentially arranged.

20. A battery unit, comprising a housing and at least one pouch battery cell, wherein:
a cell cavity is formed inside the housing, and the at least one pouch battery cell is disposed in the cell cavity; and
at least one side of the housing is provided with an electrode assembly configured to be electrically connected to other structures, and at least one side of the housing is provided with a pressure relief opening for pressure relief, wherein the electrode assembly and the pressure relief opening are located on different sides of the housing.

21. An electric device, comprising:
a device body; and
the battery pack according to any one of claims 1 to 18, mounted to the device body to supply power to the device body.
